# DEMANDE DE BREVET EUROPEEN

(11) **EP 1 237 084 A1**
(43) Date de publication de la demande: **04.09.2002**
(21) Numéro de dépôt: 02075129.3
(22) Date de dépôt: 15.01.2002
(51) Int. Cl.: G06F 11/00, G06F 11/22

(54) **Procédé pour rapporter des erreurs survenues dans l'exécution d'un programme dans un terminal électronique**

(30) Priorité: 23.01.2001 FR 0100886
(71) Demandeur: Koninklijke Philips Electronics N.V., 5621 BA Eindhoven (NL)
(72) Inventeur: Henon, Alexandre, 75008 Paris (FR)
(74) Mandataire: de la Fouchardière, Marie-Noelle

(57) **Abrégé**

Linvention propose un procédé pour rapporter des erreurs survenues dans l'exécution d'un programme dans un terminal électronique. Lorsqu'une erreur survient lors de l'exécution d'un programme, une information relative à cette erreur est élaborée automatiquement et stockée dans une mémoire d'erreur du terminal. Le contenu de la mémoire d'erreur est transmis à un équipement distant (par exemple à un serveur du fabricant du terminal) soit périodiquement, soit lorsque la mémoire d'erreur est pleine, soit sur requête du serveur. Cette transmission se fait avantageusement par message électronique de type Internet, WAP ou I-MODE.

Applications : tout terminal électronique doté de moyens de télécommunications adaptés à la transmission du contenu d'une mémoire.

## Description

### Domaine de l'invention

L'invention concerne un terminal électronique comportant au moins une mémoire de programmes pour stocker au moins un programme, et au moins un processeur destiné à exécuter ledit programme. Elle concerne aussi un système de télécommunications comportant un tel terminal.

L'invention concerne également un procédé pour rapporter des erreurs survenues dans l'exécution de programmes dans un tel terminal électronique.

Elle concerne enfin un procédé de rapatriement d'erreurs susceptibles de survenir lors de l'exécution d'au moins un programme dans au moins un terminal électronique.

L'invention s'applique avantageusement dans le domaine de l'électronique grand public. Elle s'applique par exemple à des terminaux de téléphonie mobile.

### Arrière plan technologique de l'invention

La demande de brevet internationale WO 98/38820 décrit un procédé pour télécharger un programme d'ordinateur dans un équipement de téléphonie mobile. Ce procédé est utilisé pour ajouter de nouvelles fonctionnalités à l'équipement, ou pour corriger des bogues qui peuvent exister dans ses programmes. Un tel téléchargement se fait par SMS (de l'anglais Short Message Service).

La méthode décrite dans ce document permet donc de corriger à distance des programmes stockés dans une mémoire d'un terminal électronique.

### Résumé de l'invention

Un but de l'invention est de proposer une méthode qui permette à un terminal de rapporter les erreurs survenues lors de l'exécution d'un programme.

Ce but est atteint avec un terminal selon l'invention qui comporte au moins une mémoire de programmes pour stocker au moins un programme, au moins un processeur destiné à exécuter ledit programme, des moyens pour élaborer automatiquement au moins une information relative à une erreur d'exécution dudit programme, une mémoire d'erreur pour stocker ladite information, et des moyens de transmission pour transmettre le contenu de ladite mémoire d'erreur.
Un autre but de l'invention est de proposer une méthode qui permette de rapatrier les erreurs susceptibles de survenir lors de l'exécution d'un programme dans un terminal électronique.

Ce but est atteint avec un procédé de rapatriement d'erreurs selon l'invention qui consiste à :
- doter ledit terminal de moyens pour élaborer automatiquement au moins une information relative à au moins une erreur d'exécution d'un programme, d'une mémoire d'erreur pour stocker ladite information, et de moyens de transmission pour transmettre le contenu de ladite mémoire d'erreur,
- prévoir au moins un équipement électronique central destiné à recevoir le contenu de la mémoire d'erreurs susceptibles d'être transmis par ledit terminal.

De façon avantageuse, ladite information comporte une indication de l'emplacement, dans ledit programme, auquel l'erreur s'est produite, et éventuellement une indication de la localisation de l'équipement lorsque l'erreur s'est produite, et éventuellement une indication du temps auquel l'erreur s'est produite.

Le contenu de la mémoire d'erreur est avantageusement transmis sous forme de message radio, ou sous forme de courrier électronique. Il est par exemple transmis périodiquement, et/ou lorsque la mémoire d'erreur est pleine, et/ou sur requête.

L'invention permet au fabricant de connaître les anomalies de fonctionnement des produits qu'il a vendu sans qu'il soit nécessaire pour cela que les clients rapportent leur terminal. Le fabricant dispose grâce à l'invention d'un beaucoup plus grand nombre de données qui lui permettent :
- de connaître de façon exhaustive toutes les erreurs qui se produisent,
- de les corriger beaucoup plus rapidement,
- de comparer les comportements de différents terminaux et de différentes versions de programmes,
- d'obtenir des données statistiques relatives aux erreurs survenues lors de l'exécution de programmes,
- de ne pas dépendre exclusivement des informations que les opérateurs sont susceptibles de lui fournir.
   La qualité de service du fabricant en est grandement améliorée sans qu'aucun effort supplémentaire ne soit demandé au client.

### Brève description des dessins

- la figure 1 représente un schéma d'un exemple de système de transmission selon l'invention,
- la figure 2 représente un schéma d'un exemple de terminal de téléphonie mobile selon l'invention,
- la figure 3 représente un diagramme en blocs qui décrit les différentes étapes d'un procédé selon l'invention pour rapporter des erreurs survenues lors de l'exécution d'un programme.

### Description d'un mode de réalisation préférentiel de l'invention

Dans la suite de la description, l'invention va être décrite dans le contexte d'un réseau de téléphonie mobile. Ceci n'est pas restrictif. L'invention est applicable à d'autres types de terminaux utilisant d'autres moyens de communication. Par exemple elle est applicable à des décodeurs (set top boxes en anglais) dans des réseaux de distribution par câble, par satellites, ou par voie hertzienne.

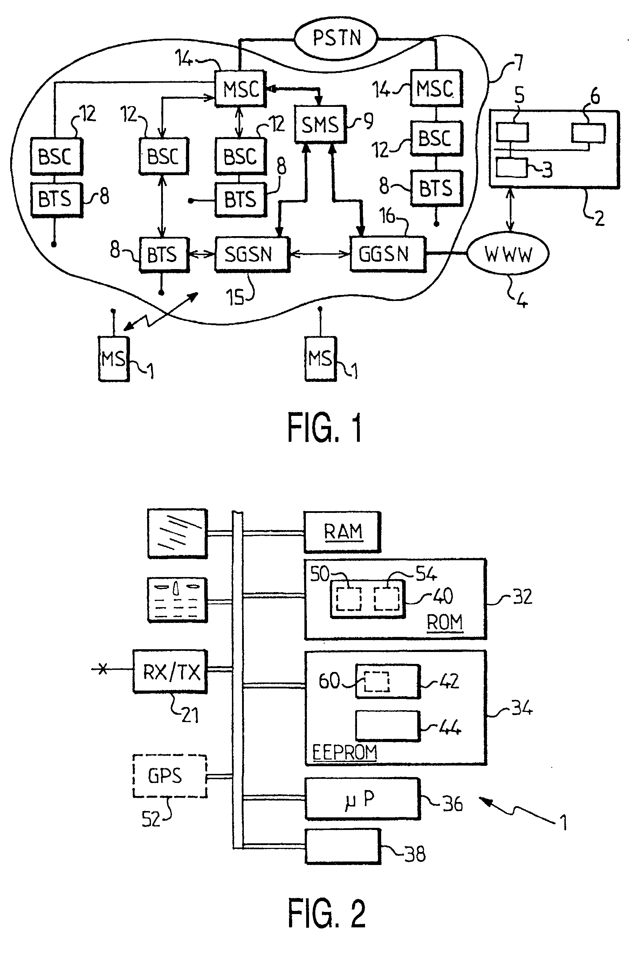

Sur la figure 1 on a représenté un exemple d'un système de télécommunications selon l'invention. Le système de la figure 1 comporte :
- des terminaux mobiles 1,
- un équipement électronique central 2 qui dans cet exemple est un serveur informatique doté de moyens d'accès 3 au réseau Internet 4, de moyens de stockage d'informations 5, et de moyens de traitement d'informations 6,
- un réseau de télécommunications mobile 7

Le réseau de télécommunications mobiles 7 contient de façon classique des stations de base 8 susceptibles de communiquer par voie radio avec les terminaux mobiles 1, des contrôleurs de station de base 12, et des centres de commutation mobile 14. Les centres de commutation mobile 14 sont interconnectés entre eux via un réseau téléphonique commuté PSTN.

Un ou plusieurs centres de messagerie 9 sont susceptibles d'être connectés à un ou plusieurs centres de commutation mobile 14. Ces centres de messageries 9 sont destinés à émettre ou recevoir des messages radio courts (couramment appelés SMS de l'anglais Short Message Service) à destination ou en provenance de terminaux mobiles 1.

Par ailleurs de façon avantageuse, le réseau de télécommunications mobiles 7 contient des noeuds GPRS. A titre d'exemple, des noeuds de service 15 (couramment appelés SGSN de l'anglais Serving GPRS Support Node) sont connectés à des stations de base 8 d'une part et à des centres de messagerie 9 d'autre part. Et des noeuds passerelles 16 (couramment appelés GGSN de l'anglais Gateway GPRS Support Node) sont connectés à des centres de messagerie 9 d'une part et à des noeuds de service 15 d'autre part. Les noeuds passerelles 16 sont avantageusement dotés d'un accès vers le réseau Internet 4.

Sur la figure 2 on a représenté un exemple d'un terminal mobile 1. Ce terminal mobile 1 comporte des moyens d'émission - réception radio 21, un ensemble à microprocesseur 22, un écran 23 et un clavier 24. L'ensemble à microprocesseur 22 comporte notamment une mémoire vive 30, une mémoire morte 32, une mémoire non volatile re-programmable 34 (de type EEPROM par exemple), un microprocesseur 36, et une horloge 38. La mémoire morte 32 contient une première mémoire de programme 40, et la mémoire non volatile 34 contient une seconde mémoire de programme 42. Les programmes de fonctionnement du terminal sont stockés dans la première ou dans la seconde mémoire de programme selon qu'ils sont ou non susceptibles d'être modifiés. La mémoire non volatile 34 comporte également une mémoire d'erreur 44.

De façon avantageuse, les terminaux mobiles 1 comportent des moyens pour envoyer des messages électroniques de type Internet, WAP ou I-MODE. Ces moyens sont constitués par un ou plusieurs programmes spécifiques 50 stockés dans l'une des mémoires de programme 40 ou 42.

Par ailleurs, un terminal mobile 1 contient avantageusement des moyens pour déterminer sa localisation. Ces moyens peuvent être basés sur la technologie GPS (Global Positioning System), ou sur des technologies de type réseau qui exploitent l'infrastructure du réseau de télécommunications mobiles pour déterminer la position du terminal. On pourra trouver des détails sur les technologies de localisation des terminaux de réseaux de télécommunication mobile dans l'article « An overview of the challenges and progress in meeting the E-911 requirement for location service » de Jeffrey H. Reed, Kevin J. Krizman, Brian D. Woerner, and Theodore S. Rappaport publié dans le journal IEEE Communication Magazine d'avril 1998. Lorsqu'on utilise la technologie GPS, les moyens pour déterminer la localisation du terminal sont constitués par un ensemble à microprocesseur dédié (sur la figure 1, un ensemble à microprocesseur dédié 52 a été représenté en pointillés). Si l'on utilise une technologie de type réseau, les moyens pour déterminer la localisation du terminal sont constitués par des programmes spécifiques de calcul de localisation 54 qui sont stockés dans l'une des mémoires de programme 40 ou 42.

De façon classique, chaque programme est organisé en modules qui comportent un ou plusieurs fichiers contenant eux-mêmes une ou plusieurs fonctions. Une fonction comporte une succession d'instructions. Il se peut que le déroulement d'une fonction ne soit pas conforme à ce qui est prévu dans cette succession d'instructions. On parle alors d'erreur survenue dans l'exécution du programme. Pour illustrer ce phénomène d'erreur, on va donner trois exemples d'erreurs susceptibles de survenir lors de l'exécution d'un programme :
1) le programme est en attente de la réception d'un message prédéterminé, et il reçoit un autre message ;
2) le programme a fait une requête pour obtenir une allocation de mémoire et il n'y a plus de mémoire disponible ;
3) le dialogue avec le microprocesseur 36 ne se fait pas correctement (par exemple à cause d'une mauvaise initialisation du microprocesseur).

D'une façon générale, il y a erreur dans l'exécution d'un programme dès que les données reçues par le programme ne sont pas conformes aux données attendues par le programme.

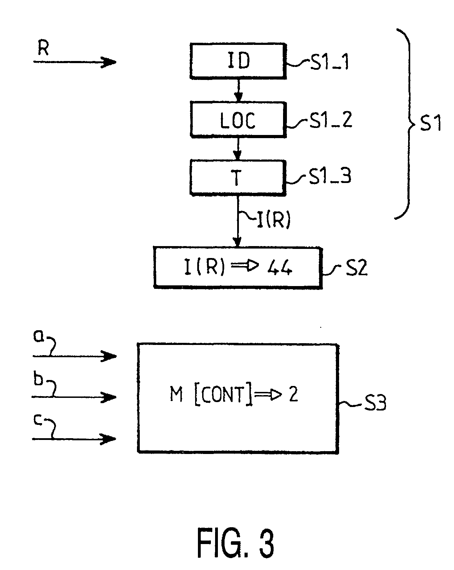

D'après la figure 3, lorsqu'une erreur R se produit, un programme spécifique 60 (stocké dans la mémoire de programme 42) est mis en oeuvre pour déterminer une information I(R) relative à ladite erreur (étape S1), et pour stocker ladite information dans la mémoire d'erreur 44 (étape S2). L'étape S1 consiste par exemple à :
- récupérer un identifiant ID qui indique le module, le fichier et la fonction dans lesquels l'erreur s'est produite (étape S1-1),
- déterminer la localisation LOC du terminal (étape S1-2),
- lire le temps T indiqué par l'horloge 38 (étape S1-3),

De façon avantageuse l'information relative à l'erreur est constituée par l'identifiant ID, la localisation LOC et le temps T.

Dans un autre mode de réalisation, au lieu de récupérer l'identifiant ID, on peut récupérer l'adresse de l'instruction à laquelle le programme s'est interrompu.

Conformément au programme 60, le contenu CONT de la mémoire 44 est transmis au serveur 2, à l'étape S3 ,dans les cas suivants :
a : la mémoire d'erreur 44 est pleine,
b : le terminal reçoit une requête en provenance du serveur 2 lui demandant de transmettre le contenu de sa mémoire d'erreur 44,
c : la transmission se fait périodiquement, et le temps indiqué par l'horloge 38 correspond à un instant de transmission.

Cette transmission se fait avantageusement par l'envoi d'un message électronique M[CONT] de type Internet qui sera acheminé au travers du réseau téléphonique mobile 7 jusqu'à un noeud passerelle GPRS doté d'un accès vers Internet, puis au travers du réseau Internet 4 jusqu'au serveur 2.

Dans un autre mode de réalisation le contenu de la mémoire d'erreur est transmis dans un ou plusieurs messages radio courts de type SMS. Dans ce cas, le ou les messages radio courts transitent sur le réseau de télécommunications mobiles 7 jusqu'à un centre de messagerie 9 où ils sont transformés en un message électronique de type Internet, WAP ou I-MODE. Le message électronique ainsi obtenu transite ensuite sur le réseau Internet 4 (via un noeud passerelle GPRS par exemple) jusqu'au serveur 2 qui en est destinataire.

L'invention n'est pas limitée aux modes de réalisation qui viennent d'être décrits à titre d'exemples.

En particulier, elle n'est pas limitée à l'envoi de messages électroniques de type Internet via un réseau de type GPRS. Elle est applicable à d'autres types de réseaux, et à d'autres moyens et protocoles de transport (transport de type WAP en mode circuit via un réseau de type GSM par exemple, ou transport de type I-MODE en mode paquets via un réseau de type GPRS ou UMTS).

L'invention est aussi applicable dans d'autres domaines que dans celui de la téléphonie mobile. D'une façon générale, l'invention s'applique à tout type de terminal électronique doté de moyens de télécommunications adaptés à la transmission du contenu d'une mémoire d'erreur selon l'invention.

Enfin, l'information relative à l'erreur d'exécution peut comporter des indications différentes de celles qui ont été citées à titre d'exemple.

## Revendications

1. Terminal électronique (1) comportant au moins une mémoire de programmes (40, 42) pour stocker au moins un programme, au moins un processeur (36) destiné à exécuter ledit programme, des moyens (60 ; Si) pour élaborer automatiquement au moins une information (I(R)) relative à une erreur d'exécution dudit programme (R), une mémoire d'erreur (44) pour stocker (60 ; S2) ladite information, et des moyens de transmission (21, 50) pour transmettre le contenu de ladite mémoire d'erreur (60 ; S3).

2. Terminal électronique selon la revendication 1,**caractérisé en ce que** le contenu de la mémoire d'erreur est transmis en vue de son utilisation par le fabricant dudit terminal.

3. Terminal électronique selon la revendication 1 **caractérisé en ce que** ladite information comporte une indication (ID) d'un emplacement dans ledit programme auquel l'erreur d'exécution s'est produite.

4. Terminal électronique selon la revendication 1, **caractérisé en ce qu'**il comporte des moyens pour déterminer sa localisation (52, 54), et **en ce que** ladite information comporte une indication (LOC) de la localisation de l'équipement lorsque l'erreur d'exécution dudit programme s'est produite.

5. Terminal électronique selon la revendication 1, **caractérisé en ce qu'**il comporte une horloge (38) donnant une indication de temps, et **en ce que** ladite information comporte une indication du temps (T) auquel l'erreur d'exécution dudit programme s'est produite.

6. Terminal électronique selon la revendication 1, **caractérisé en ce que** le contenu de la mémoire d'erreur est transmis sous forme de messages radio courts (SMS).

7. Terminal électronique selon la revendication 1, **caractérisé en ce que** le contenu de la mémoire d'erreur est transmis sous forme de courrier électronique.

8. Terminal électronique selon la revendication 1, **caractérisé en ce que** le contenu de la mémoire d'erreur est transmis lorsque ladite mémoire d'erreur est pleine (a).

9. Terminal électronique selon la revendication 1, **caractérisé en ce que** le contenu de la mémoire d'erreur est transmis périodiquement (c).

10. Terminal électronique selon la revendication 1, **caractérisé en ce que** le contenu de la mémoire d'erreur est transmis sur requête (b).

11. Système de télécommunication comportant au moins un terminal électronique (1) selon la revendication 1, et au moins un équipement électronique central (2) destiné à recevoir le contenu de la mémoire d'erreur (44) susceptible d'être transmis par ledit terminal.

12. Procédé pour rapporter des erreurs (R) survenues dans l'exécution de programmes dans un terminal électronique (1), **caractérisé en ce qu'**il consiste à élaborer automatiquement au moins une information (I(R)) relative à au moins une erreur (R) survenue lors de l'exécution d'un programme, à stocker ladite information dans une mémoire d'erreur (44) dudit terminal (1), et à transmettre le contenu de la mémoire d'erreur.

13. Procédé de rapatriement d'erreurs (R) susceptibles de survenir lors de l'exécution d'au moins un programme dans au moins un terminal électronique (1), **caractérisé en ce qu'**il consiste à :
- doter ledit terminal (1) de moyens (60; Si) pour élaborer automatiquement au moins une information relative à au moins une erreur d'exécution d'un programme, d'une mémoire d'erreur (44) pour stocker ladite information (60 ; S2), et de moyens de transmission (21, 50) pour transmettre le contenu de ladite mémoire d'erreur (60 ; S3),
- prévoir au moins un équipement électronique central (2) destiné à recevoir le contenu de la mémoire d'erreurs susceptibles d'être transmis par ledit terminal.
